# EUROPÄISCHE PATENTSCHRIFT

(11) **EP 4 151 475 B1**
(45) Veröffentlichungstag und Bekanntmachung des Hinweises auf die Patenterteilung: **26.08.2026**
(21) Anmeldenummer: 22196011.5
(22) Anmeldetag: 16.09.2022
(51) Int. Cl.: B60T 8/88, B60T 17/22

(54) **VERFAHREN ZUR DIAGNOSE UND KALIBRIERUNG EINES BREMSSYSTEMS EINES KRAFTFAHRZEUGS**
METHOD FOR DIAGNOSING AND CALIBRATING A BRAKE SYSTEM OF A MOTOR VEHICLE
PROCÉDÉ DE DIAGNOSTIC ET D'ÉTALONNAGE D'UN SYSTÈME DE FREINAGE D'UN VÉHICULE AUTOMOBILE

(30) Priorität: 17.09.2021 DE 102021210355
(43) Veröffentlichungstag der Anmeldung: 22.03.2023
(73) Patentinhaber: Schaeffler Technologies AG & Co. KG, 91074 Herzogenaurach (DE)
(72) Erfinder: van Booven, Benedikt, 81737 München (DE); Reitmeier, Willibald, 81737 München (DE)
(74) Vertreter: Schaeffler Technologies

(56) Entgegenhaltungen:
- WO-A1-2020/262278
- DE-A1- 102009 041 951
- DE-A1- 102011 004 995
- DE-A1- 102012 007 471
- DE-A1- 102017 124 437
- DE-T5- 112020 003 056

## Beschreibung

Die vorliegende Erfindung betrifft ein Verfahren zur Diagnose und/oder Kalibrierung eines Bremssystems eines Kraftfahrzeugs. Die Erfindung betrifft weiter eine Steuereinheit zur Durchführung eines solchen Verfahrens und ein Kraftfahrzeug mit einer solchen Steuereinheit.

Kraftfahrzeuge mit rein elektromotorischem Antrieb haben den Vorteil, dass sie im Vergleich zu Fahrzeugen mit Verbrennungsmotor wesentlich wartungsärmer sind. So sind, neben dem Wegfall des Kraftstoffs, weniger Betriebsflüssigkeiten, wie Schmierstoffe, Kühlfluide oder dergleichen erforderlich, um einen elektromotorischen Antriebsstrang zu betreiben.

Es wird daher angestrebt, die Wartungsintervalle möglichst aller Funktionseinheiten eines Kraftfahrzeugs an die langen Wartungsintervalle der elektromotorischen Antriebseinheit anzugleichen, um diesbezüglich den Kundennutzen elektromotorisch betriebener Kraftfahrzeuge zu maximieren.

Ein limitierender Faktor für die Zeitspannen zwischen einzelnen Inspektions- bzw. Wartungsterminen ist üblicherweise das hydraulische Bremssystem eines Kraftfahrzeugs. So ist häufig vorgesehen, dass die hygroskopische Bremsflüssigkeit, unabhängig von der Laufleistung eines Kraftfahrzeugs, spätestens alle zwei Jahre erneuert werden muss, um einen sicheren Betrieb des Kraftfahrzeugs zu gewährleisten.

Die Bordnetze von vollständig oder teilweise elektromotorisch angetriebenen Kraftfahrzeugen ermöglichen inzwischen den effizienten Betrieb von rein elektrisch aktuierten Bremssystemen. Derartige Bremssysteme kommen ohne eine Hydraulik und ohne Bremsflüssigkeit aus, so dass im Zuge der Wartung im Wesentlichen nur deren Verschleißteile, wie z.B. Bremsbeläge und Bremsscheiben, ausgetauscht werden müssen, soweit diese am Ende ihrer Lebensdauer angelangt sind.

Dieser Austausch erfolgt in Abhängigkeit von der Laufleistung und dem Fahrstil des Fahrzeugführers und ist nicht zu festgelegten Zeitabständen erforderlich. Im Vergleich zu hydraulischen Bremssystemen kann daher das Wartungsintervall des elektrischen Bremssystems gerade bei Fahrzeugen mit geringer jährlicher Laufleistung deutlich gesteigert werden. Zudem entfallen die Kosten für den Austausch und die Entsorgung von Bremsflüssigkeit. Der Wegfall der Bremsflüssigkeit ist zudem umweltfreundlich, da diese als Sondermüll entsorgt werden muss.

Da Bremssysteme das wichtigste Sicherheitssystem eines Kraftfahrzeugs sind, muss deren zuverlässige Funktion jederzeit gewährleistet sein. Dies gilt umso mehr vor dem Hintergrund der zuvor geschilderten Bestrebungen, dass Wartungsintervalle deutlich verlängert werden sollen.

Bremssysteme mit Sensorik im Aktuierungspfad, wie z.B. hydraulische Bremssysteme, werden üblicherweise durch eine Druckkontrolle im Stillstand des Fahrzeugs überprüft. Die Funktionskontrolle erfolgt dabei über den Aktuierungspfad. Im Fahrbetrieb kann die Funktion der hydraulischen Bremse über Raddrehzahlsensoren während eines aktiven Bremseingriffs kontrolliert werden.

Das Dokument DE 10 2017 124 437 A1 beschreibt ein Verfahren zur Bremsfunktionsprüfung bei einer mobilen Arbeitsmaschine mit Federspeicherbremse.

Bremssysteme mit radindividueller Bremsmoment Indizierung, wie z.B. elektrische Bremssysteme, lassen sich jedoch im Stillstand des Kraftfahrzeugs nicht ohne weiteres überprüfen, da allein das Öffnen und Schließen der Bremsbacken noch keinen Rückschluss auf die tatsächlich zur Verfügung stehende Bremsleistung zulässt. Denn die Bremse erfährt in diesem Zustand keinerlei Bremsmoment, soweit das Fahrzeug z.B. in einer Ebene steht. Die Funktionskontrolle über ein gemessenes Bremsmoment ist in diesem Fall nicht möglich.

Vor diesem Hintergrund liegt der vorliegenden Erfindung die technische Problemstellung zugrunde, ein Verfahren zur Diagnose und/oder Kalibrierung eines Bremssystems anzugeben, insbesondere eines Bremssystems mit radindividueller Bremsmoment Indizierung, das eine zuverlässige Diagnose und/oder Kalibrierung ermöglicht. Weiter sollen eine Steuerung zur Ausführung eines solchen Verfahrens und ein Kraftfahrzeug mit einer solchen Steuerung angegeben werden.

Die voranstehend beschriebene technische Problemstellung wird jeweils durch die unabhängigen Ansprüche gelöst. Weitere Ausgestaltungen der Erfindung ergeben sich aus den abhängigen Ansprüchen und der nachstehenden Beschreibung.

Gemäß einem ersten Aspekt betrifft die Erfindung ein Verfahren zur Diagnose und/oder Kalibrierung eines Bremssystems eines Kraftfahrzeugs, wobei das Bremssystem mindestens eine Bremseinheit zum Abbremsen und Feststellen eines der Bremseinheit zugeordneten Rads des Kraftfahrzeugs hat, wobei die Bremseinheit an einer Fahrzeugkarosserie des Kraftfahrzeugs befestigt ist, wobei die Bremseinheit einen Aktuator zum Anlegen eines Bremsbelags an ein mit dem Rad gekoppeltes Bremselement, wie eine Bremsscheibe oder dergleichen, aufweist und wobei der Bremseinheit ein Sensor zum Messen einer Abstützkraft der Bremseinheit an der Fahrzeugkarosserie des Kraftfahrzeugs zugeordnet ist, mit den Verfahrensschritten: Diagnose der Bremseinheit durch Feststellen des Rads mittels der Bremseinheit, Erzeugen eines Antriebsmoments mittels eines Antriebsstrangs des Kraftfahrzeugs und Messen der Abstützkraft der Bremseinheit infolge des Antriebsmoments; und/oder Kalibrierung der Bremseinheit durch Feststellen des Rads mittels der Bremseinheit, Erzeugen mindestens eines definierten Antriebsmoments mittels des Antriebsstrangs des Kraftfahrzeugs und Anpassen von einem oder mehreren Steuerungsparametern der Bremseinheit, wie ein Reibwert, ein Sensorprofil des Kraftsensors oder dergleichen; und/oder Kalibrierung des Kraftsensors durch Bestimmen einer Nullpunktverschiebung des Kraftsensors durch Erfassen eines Messsignals im lastfreien Zustand des Kraftsensors während das zugeordnete Rad im Fahrbetrieb des Kraftfahrzeugs ohne einen Bremseingriff der Bremseinheit frei dreht und Speichern der Nullpunktverschiebung des Kraftsensors.

Die erste Alternative des Verfahrens sieht eine Diagnose der Bremseinheit vor, und zwar durch Feststellen des Rads mittels der Bremseinheit, Erzeugen eines Antriebsmoments mittels des Antriebsstrangs des Kraftfahrzeugs und Messen der Abstützkraft der Bremseinheit infolge des Antriebsmoments. Die Antriebseinheit erzeugt daher ein Antriebsmoment, dem die Bremseinheit entgegenwirken muss, wobei dieses Antriebsmoment über die Bremseinheit an der Karosserie abgestützt wird. Dabei befindet sich der Kraftsensor im Kraftfluss und kann die Reaktionskraft der Bremseinheit infolge des Antriebsmoments messen. Mit anderen Worten wird das Radbremsmoment des Rads in Form der Abstützkraft gemessen.

Beispielsweise kann die Bremseinheit von einer Steuereinheit dann als voll funktionsfähig bewertet werden, sofern die gemessene Reaktionskraft während der Diagnose einen vorgegebenen Schwellwert übersteigt. Beispielsweise kann die Bremseinheit von einer Steuereinheit dann als nicht funktionsfähig bewertet werden, sofern die gemessene Reaktionskraft während der Diagnose einen vorgegebenen Schwellwert nicht übersteigt und/oder ein Bewegen des der Bremseinheit zugeordneten Rads infolge des Antriebsmoments ein vorgegebenes Winkelinkrement übersteigt.

Beispielsweise kann die Bremseinheit von einer Steuereinheit dann als voll funktionsfähig bewertet werden, sofern ein gemessener Anstieg der Reaktionskraft pro Zeiteinheit während der Diagnose einen vorgegebenen Schwellwert übersteigt. Beispielsweise kann die Bremseinheit von einer Steuereinheit dann als nicht funktionsfähig bewertet werden, sofern ein gemessener Anstieg der Reaktionskraft pro Zeiteinheit während der Diagnose einen vorgegebenen Schwellwert nicht übersteigt.

Das Erzeugen des Antriebsmoments zur Diagnose der Bremseinheit kann im Stillstand des Fahrzeugs erfolgen oder aus dem Stillstand des Fahrzeugs heraus erfolgen. So kann die Diagnose der Bremseinheit insbesondere vor einer Fahrt bei stillstehendem Fahrzeug erfolgen.

Es kann vorgesehen sein, dass ein der Bremseinheit zugeordnetes Rad während der Diagnose eine inkrementelle Drehung erfährt. Insbesondere kann die Diagnose der Bremseinheit daher aus dem Stillstand des Kraftfahrzeugs heraus erfolgen, wobei es zu einer inkrementellen Drehung eines der Bremseinheit zugeordneten Rads kommen kann.

Die zweite Alternative des Verfahrens sieht eine Kalibrierung der Bremseinheit vor, und zwar durch Feststellen des Rads mittels der Bremseinheit, Erzeugen mindestens eines definierten Antriebsmoments mittels eines Antriebsstrangs des Kraftfahrzeugs und Anpassen von einem oder mehreren Steuerungsparametern der Bremseinheit, wie ein Reibwert, ein Sensorprofil des Kraftsensors oder dergleichen.

Der Reibwert ist insbesondere der Reibwert eines Bremsbelags, der sich durch Verschleiß gegenüber einem Neuzustand geändert haben kann. Der Reibwert kann in gleicher Weise für einen Neuzustand des Bremsbelags ermittelt werden und entsprechend angepasst werden.

Der Betrag des erzeugten definierten Antriebsmoments wird insbesondere an eine Steuereinheit übergeben, um das erzeugte definierte Antriebsmoment einer gemessenen Abstützkraft des Kraftsensors zuzuordnen.

Das Sensorprofil kann durch eine Funktion beschrieben werden, die anhand der Messwerte bestimmt worden ist. Insbesondere kann eine Steuereinheit die Messwerte durch Ausgleichsrechnung in eine Funktion überführen, die das Sensorprofil repräsentiert.

Sofern der Sensor in seinem Messbereich z.B. lineares Verhalten zeigt, kann das Sensorprofil durch eine lineare Funktion beschrieben werden. Es versteht sich, dass das Sensorverhalten alternativ durch eine nicht-lineare Funktion beschrieben werden kann, sofern der Sensor entlang seines Messbereichs nicht-lineares Verhalten zeigt.

Es kann vorgesehen sein, dass der Aktuator ein Elektromotor ist. Die Verwendung eines rein elektrischen Aktuators ermöglicht den Wegfall der Bremsflüssigkeit und hat die eingangs beschriebenen Wartungs-, Kosten- und Umweltvorteile.

Es kann vorgesehen sein, dass der Aktuator ein hydraulischer Aktuator ist, wie ein Hydraulikzylinder oder dergleichen. Das Verfahren kann daher auch für hydraulisch aktuierte Bremssysteme eingesetzt werden.

Das Verfahren kann insbesondere für Bremssysteme mit radindividueller Bremsmoment Indizierung verwendet werden. Insbesondere ist das vorliegende Bremssystem ein Bremssystem mit radindividueller Bremsmoment Indizierung.

Es kann vorgesehen sein, dass das Bremselement der Bremseinheit eine Trommel einer Trommelbremse ist.

Es kann vorgesehen sein, dass der Antriebsstrang mindestens eine elektrische Maschine zum Antrieb des Kraftfahrzeugs hat, wobei das Kraftfahrzeug ein rein elektromotorisch angetriebenes Fahrzeug oder ein Hybridfahrzeug ist.

Es kann vorgesehen sein, dass das Kraftfahrzeug eine Traktionsbatterie zur Energieversorgung der elektrischen Maschine hat. Mit der elektrischen Maschine lässt sich ein Antriebsmoment im Stillstand des Kraftfahrzeugs geräuschlos aufbauen und ist stufenlos regelbar. Auf diese Weise kann eine Diagnose und/oder Kalibrierung durchgeführt werden, ohne dass es von den Insassen des Kraftfahrzeugs bemerkt und ggf. als störend empfunden wird.

Es kann vorgesehen sein, dass das Kraftfahrzeug zur Energieversorgung der elektrischen Maschine eine Brennstoffzelle aufweist.

Es kann vorgesehen sein, dass das Kraftfahrzeug einen Verbrennungsmotor hat.

Es kann vorgesehen sein, dass das Kraftfahrzeug rein verbrennungsmotorisch angetrieben ist.

Das Kalibrieren der Bremseinheit kann folgenden Verfahrensschritt aufweisen: Erzeugen von zwei oder mehr definierten Antriebsmomenten mittels des Antriebsstrangs des Kraftfahrzeugs und Anpassen eines gespeicherten Sensorprofils des Kraftsensors anhand von aus den Antriebsmomenten resultierenden Messwerten des Kraftsensors. Sofern zwei oder mehr Antriebsmomente erzeugt werden, werden mehr Messwerte zum Anpassen eines gespeicherten Sensorprofils bereitgestellt.

Die zwei oder mehr Antriebsmomente können gestaffelt sein, wobei z.B. ein erstes definiertes Antriebsmoment kleiner sein kann als ein zweites definiertes Antriebsmoment. Weiter kann ein drittes definiertes Antriebsmoment größer sein als das zweite definierte Antriebsmoment.

Insbesondere kann ein Profil eines definierten Antriebsmomentverlaufs vorgegeben werden, wobei das Profil insbesondere zumindest abschnittweise ein gleichbleibendes Antriebsmoment und/oder ein ansteigendes Antriebsmoment und/oder ein fallendes Antriebsmoment und/oder ein alternierendes Antriebsmoment aufweist. Es kann vorgesehen sein, dass ein negatives Antriebsmoment und/oder ein positives Antriebsmoment aufgebracht wird. Es kann vorgesehen sein, dass ein erstes definiertes Antriebsmoment Null ist und ein zweites definiertes Antriebsmoment ungleich Null ist.

Wenn vorliegend vom Anpassen eines gespeicherten Sensorprofils gesprochen wird, so kann entweder ein bestehendes Sensorprofil anhand der Messwerte modifiziert werden, um das bestehende Sensorprofil an das tatsächliche Verhalten des Sensors anzupassen, oder das bestehende Sensorprofil kann vollständig durch ein mittels der Steuereinheit neu generiertes Sensorprofil ersetzt werden.

Vor dem Anpassen des Sensorprofils kann eine Plausibilitätsprüfung durchgeführt werden. D.h. für den Fall, dass das modifizierte Sensorprofil oder das neu generierte Sensorprofil zu stark von dem bestehenden Sensorprofil abweichen, kann z.B. eine Fehlermeldung, ein Wartungshinweis dergleichen ausgegeben werden.

Es kann vorgesehen sein, dass das Erzeugen des Antriebsmoments zur Diagnose der Bremseinheit im Stillstand des Fahrzeugs erfolgt und/oder das Erzeugen des definierten Antriebsmoments zur Kalibrierung der Bremseinheit im Stillstand des Fahrzeugs erfolgt. Insbesondere kann die Diagnose der Bremseinheit und/oder die Kalibrierung der Bremseinheit nach einem Startvorgang des Kraftfahrzeugs und vor einer Fahrt mit dem Kraftfahrzeug automatisiert durchgeführt werden. So kann vor einer Fahrt sichergestellt werden, dass das Bremssystem zuverlässig arbeitet.

Alternativ oder ergänzend kann vorgesehen sein, dass die Kalibrierung des Kraftsensors während der Fahrt des Kraftfahrzeugs automatisiert durchgeführt wird. So kann eine Nullpunktverschiebung des Sensors selbsttätig nachgeführt werden.

Insbesondere können alle Verfahrensschritte des erfindungsgemäßen Verfahrens selbsttätig als Eigendiagnose bzw. Eigenkalibrierung durchgeführt werden, d.h. ohne einen Benutzereingriff. Dies erhöht die Sicherheit für den Fahrbetrieb sowohl beim manuellen als auch beim teil-autonomen oder vollautonomen Fahrbetrieb des Kraftfahrzeugs.

Die automatische Diagnose und/oder automatische Kalibrierung können insbesondere zu vorgegebenen Zeitintervallen und/oder vorgegebenen Laufleistungsintervallen durchgeführt werden.

Der Kraftsensor kann ein resistiv, kapazitiv, induktiv oder optisch arbeitender Sensor sein. Der Kraftsensor kann einen Dehnmesstreifen oder mehrere Dehnmesstreifen aufweisen oder einen oder mehrere magnetoelastische oder magnetoresistive Kraftaufnehmer aufweisen oder aus einem Dehnmesstreifen oder einem magnetoelastischen oder magnetoresistivem Kraftaufnehmer bestehen. Der magnetoresistive Kraftaufnehmer kann auch als AMR-Sensor bezeichnet werden, wobei die Abkürzung "AMR" in bekannter Weise für "anisotrop magneto-resistiv" steht.

Beispielsweise können bis zu vier Dehnmessstreifen zur Kraftmessung eingesetzt werden, die einen Kraftsensor bilden. Beispielsweise können genau vier Dehnmessstreifen zur Kraftmessung eingesetzt werden, die einen Kraftsensor bilden.

Es können zwei oder mehr Kraftsensoren vorgesehen sein, die der Bremseinheit zugeordnet sind. Es können sowohl ein Dehnmesstreifen oder mehr Dehnmessstreifen und zusätzlich z.B. einer oder mehr magnetoresistive Kraftaufnehmer verwendet werden, die der Bremseinheit zugeordnet sind. So können Redundanzen geschaffen werden, um die Sicherheit des Bremssystems weiter zu erhöhen.

Das Bremssystem kann zwei oder mehr Bremseinheiten aufweisen, wobei insbesondere jedem Rad des Fahrzeugs eine Bremseinheit zugordnet ist und wobei die Diagnose und/oder Kalibrierung für jede Bremseinheit des Kraftfahrzeugs automatisiert durchgeführt wird.

Insbesondere kann vorgesehen sein, dass jede Bremseinheit für sich genommen einer Diagnose und/oder Kalibrierung unterzogen wird. Alternativ oder ergänzend kann vorgesehen sein, dass genau zwei Bremseinheiten oder zwei oder mehr Bremseinheiten gleichzeitig einer Diagnose und/oder Kalibrierung unterzogen werden. Alternativ oder ergänzend kann vorgesehen sein, dass die Bremseinheiten paarweise einer Diagnose und/oder Kalibrierung unterzogen werden, insbesondere die Bremseinheiten einer Achse des Kraftfahrzeugs. Alternativ oder ergänzend kann vorgesehen sein, dass alle Bremseinheiten gleichzeitig einer Diagnose und/oder Kalibrierung unterzogen werden.

Wenn vorliegend von einer Diagnose und/oder Kalibrierung gesprochen wird, so kann diese Kalibrierung die Kalibrierung der Bremseinheit und/oder die Kalibrierung des Kraftsensors aufweisen.

Die Bremseinheit kann eine Scheibenbremse aufweisen. Es kann vorgesehen sein, dass jede Bremseinheit eine Scheibenbremse aufweist.

Die Bremseinheit kann eine Trommelbremse aufweisen. Es kann vorgesehen sein, dass jede Bremseinheit eine Trommelbremse aufweist.

Es kann vorgesehen sein, dass das Bremssystem Scheibenbremsen und Trommelbremsen aufweist.

Gemäß einem zweiten Aspekt betrifft die Erfindung eine Steuereinheit, wobei die Steuerreinheit zur Durchführung des erfindungsgemäßen Verfahrens eingerichtet ist.

Gemäß einem dritten Aspekt betrifft die Erfindung ein Kraftfahrzeug, mit einem Antriebsstrang, mit einem Bremssystem und mit einer erfindungsgemäßen Steuereinheit.

Es kann vorgesehen sein, dass der Antriebsstrang mindestens eine elektrische Maschine zum Antrieb des Kraftfahrzeugs hat, wobei das Kraftfahrzeug ein rein elektromotorisch angetriebenes Fahrzeug oder ein Hybridfahrzeug ist.

Es kann vorgesehen sein, dass das Kraftfahrzeug eine Traktionsbatterie zur Energieversorgung der elektrischen Maschine hat.

Es kann vorgesehen sein, dass das Kraftfahrzeug zur Energieversorgung der elektrischen Maschine eine Brennstoffzelle aufweist.

Gemäß einer alternativen Ausgestaltung kann vorgesehen sein, dass das Kraftfahrzeug einen Verbrennungsmotor hat.

Gemäß einem vierten Aspekt betrifft die Erfindung ein Kraftfahrzeug, mit einem Antriebsstrang, mit einem Bremssystem und mit einer erfindungsgemäßen Steuereinheit, wobei das Kraftfahrzeug einen Verbrennungsmotor aufweist und insbesondere rein verbrennungsmotorisch angetrieben ist.

Es kann vorgesehen sein, dass ein Bordnetz des Kraftfahrzeugs die Bremseinheit mit einer Eingangsspannung von 48V versorgt.

Nachfolgend wird die Erfindung anhand einer Ausführungsbeispiele darstellenden Zeichnung näher beschrieben. Es zeigen jeweils schematisch:
- Fig. 1: ein erfindungsgemäßes Kraftfahrzeug mit einem Bremssystem in einer Draufsicht;
- Fig. 2: einen Ablaufplan einer ersten Alternative eines erfindungsgemäßen Verfahrens;
- Fig. 3: einen Ablaufplan einer zweiten Alternative eines erfindungsgemäßen Verfahrens;
- Fig. 4: einen Ablaufplan einer dritten Alternative eines erfindungsgemäßen Verfahrens.

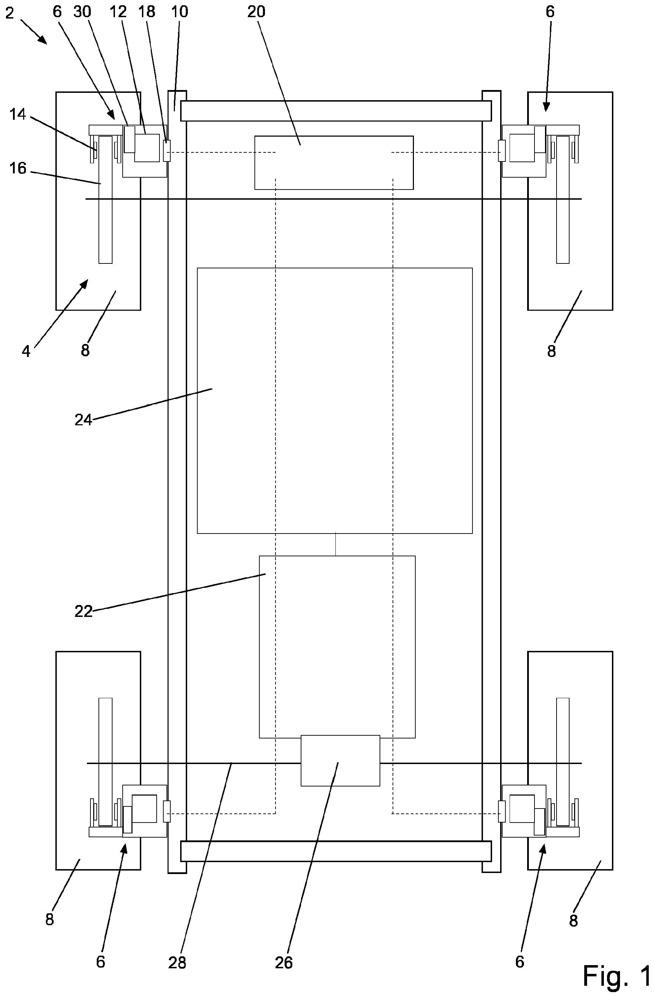

Fig. 1 zeigt eine schematische Draufsicht eines Kraftfahrzeugs 2, wie eines PKW oder dergleichen. Das Kraftfahrzeug 2 hat ein Bremssystem 4 mit vier Bremseinheiten 6. Jede Bremseinheit 6 ist einem Rad 8 des Kraftfahrzeugs 2 zugeordnet und zum Abbremsen und Feststellen des zugeordneten Rads 8 eingerichtet.

Jede Bremseinheit 6 ist an einer Fahrzeugkarosserie 10 des Kraftfahrzeugs 2 befestigt. Jede Bremseinheit 6 weist einen Elektromotor 12 als Aktuator auf. Der jeweilige Elektromotor 12 dient zum Anlegen eines Bremsbelags 14 an ein mit dem Rad 8 gekoppeltes Bremselement 16, vorliegend eine Bremsscheibe 16.

Die Bremseinheiten 6 sind im Wesentlichen identisch aufgebaut, so dass lediglich die Komponenten einer Bremseinheit 6 mit Bezugszeichen versehen worden sind.

Jeder Bremseinheit 6 ist jeweils ein Kraftsensor 18 zum Messen einer Abstützkraft der Bremseinheit 6 an der Fahrzeugkarosserie 10 des Kraftfahrzeugs 2 zugeordnet.

Das Kraftfahrzeug 2 weist eine erfindungsgemäße Steuereinheit 20 auf.

Jeder Kraftsensor 18 ist mit der erfindungsgemäßen Steuereinheit 20 des Kraftfahrzeugs 2 verbunden.

Das Kraftfahrzeug 2 ist ein rein elektromotorisch betriebenes Kraftfahrzeug 2.

Das Kraftfahrzeug 2 hat eine elektrische Maschine 22 zum Antrieb des Kraftfahrzeugs 2 und eine Traktionsbatterie 24 zur Energieversorgung der elektrischen Maschine 22.

Die elektrische Maschine 22 ist über ein Getriebe 26 mit einer Achse 28 des Fahrzeugs 2 verbunden. Die elektrische Maschine 22, das Getriebe 26 und die Traktionsbatterie 24 sind Teil eines Antriebsstrangs des Kraftfahrzeugs 2.

Jeder Bremseinheit 6 können eine, zwei oder mehr Zahnradstufen 30 zugeordnet sein, um eine Übersetzung zwischen einer Ausgangswelle des Elektromotors und dem zu aktuierenden Bremsbelag 14 zu erreichen.

Jede Bremseinheit 6 kann als Parkbremse eingerichtet sein.

Die Steuereinrichtung 20 ist zur Durchführung der nachfolgend beschriebenen Alternativen des erfindungsgemäßen Verfahrens eingerichtet.

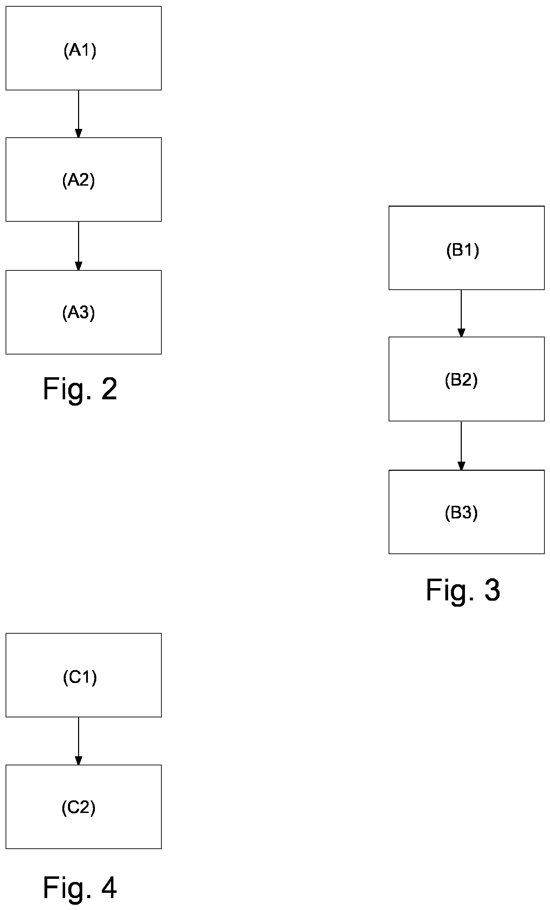

Gemäß einer ersten Alternative des erfindungsgemäßen Verfahrens werden die folgenden Verfahrensschritte durchgeführt (Fig. 2):
Diagnose der Bremseinheit durch
(A1) Feststellen des Rads 8 mittels der Bremseinheit 6,
(A2) Erzeugen eines Antriebsmoments mittels des Antriebsstrangs 22, 24, 26 des Kraftfahrzeugs 2,
(A3) Messen der Abstützkraft der Bremseinheit 6 infolge des Antriebsmoments, wobei das Erzeugen des Antriebsmoments zur Diagnose der Bremseinheit 6 im Stillstand des Fahrzeugs 2 erfolgt.

Die Schritte A1, A2 und A3 können für jede Bremseinheit 6 einzeln durchgeführt werden. Alternativ können die Schritte A1, A2 und A3 z.B. für zwei Bremseinheiten 6 gleichzeitig durchgeführt werden. Die Schritte A1, A2 und A3 können alternativ für alle Bremseinheiten 6 gleichzeitig durchgeführt werden.

Gemäß einer zweiten Alternative des erfindungsgemäßen Verfahrens werden die folgenden Verfahrensschritte durchgeführt (Fig. 3):
Kalibrierung der Bremseinheit 6 durch
(B1) Feststellen des Rads 8 mittels der Bremseinheit 6;
(B2) Erzeugen von zwei oder mehr definierten Antriebsmomenten mittels des Antriebsstrangs 22, 24, 26 des Kraftfahrzeugs 2, wobei das Erzeugen des definierten Antriebsmoments zur Kalibrierung der Bremseinheit 6 im Stillstand des Fahrzeugs 2 erfolgt, und
(B3) Anpassen von einem oder mehreren Steuerungsparametern der Bremseinheit 6, wie ein Reibwert, ein Sensorprofil des Kraftsensors 18 oder dergleichen.

Die Antriebsmomente werden vorliegend ansteigend bzw. gestaffelt aufgebracht, wobei es erstes Antriebsmoment kleiner ist als ein danach aufgebrachtes zweites Antriebsmoment.

Insbesondere werden zwei oder mehr definierte Antriebsmomente mittels des Antriebsstrangs 22, 24, 26 des Kraftfahrzeugs 2 erzeugt und es erfolgt insbesondere ein Anpassen eines gespeicherten Sensorprofils des Kraftsensors 18 anhand von aus den Antriebsmomenten resultierenden Messwerten des Kraftsensors 18.

Die Schritte B1, B2 und B3 können für jede Bremseinheit 6 einzeln durchgeführt werden. Alternativ können die Schritte B1, B2 und B3 z.B. für zwei Bremseinheiten 6 gleichzeitig durchgeführt werden. Die Schritte B1, B2 und B3 können alternativ für alle Bremseinheiten 6 gleichzeitig durchgeführt werden.

Gemäß einer dritten Alternative des erfindungsgemäßen Verfahrens werden die folgenden Verfahrensschritte durchgeführt (Fig. 4):
Kalibrierung des Kraftsensors 18 durch
(C1) Bestimmen einer Nullpunktverschiebung des Kraftsensors 18 durch Erfassen eines Messsignals im lastfreien Zustand des Kraftsensors 18 während das zugeordnete Rad 8 im Fahrbetrieb des Fahrzeugs 2 ohne einen Bremseingriff der Bremseinheit 6 frei dreht und
(C2) Speichern der Nullpunktverschiebung des Kraftsensors 18 in der Steuereinheit 20.

Die Schritte C1 und C2 können für jeden Kraftsensor 18 einzeln durchgeführt werden. Alternativ können die Schritte C1 und C2 z.B. für zwei Kraftsensoren 18 gleichzeitig durchgeführt werden. Die Schritte C1 und C2 können alternativ für alle Kraftsensoren 18 gleichzeitig durchgeführt werden.

### Bezugszeichen

- 2: Kraftfahrzeug
- 4: Bremssystem
- 6: Bremseinheit
- 8: Rad
- 10: Karosserie
- 12: Elektromotor
- 14: Bremsbelag
- 16: Bremsscheibe
- 18: Kraftsensor
- 20: Steuereinheit
- 22: elektrische Maschine
- 24: Traktionsbatterie
- 26: Getriebe
- 28: Achse
- 30: Getriebestufe

## Patentansprüche

1. Verfahren zur Diagnose und/oder Kalibrierung eines Bremssystems (4) eines Kraftfahrzeugs (2),
- wobei das Bremssystem (4) mindestens eine Bremseinheit (6) zum Abbremsen und Feststellen eines der Bremseinheit (6) zugeordneten Rads (8) des Kraftfahrzeugs (2) hat,
- wobei die Bremseinheit (6) an einer Fahrzeugkarosserie (10) des Kraftfahrzeugs (2) befestigt ist, wobei die Bremseinheit (6) einen Aktuator (12) zum Anlegen eines Bremsbelags (14) an ein mit dem Rad (8) gekoppeltes Bremselement (16), wie eine Bremsscheibe (16) oder dergleichen, aufweist und
- wobei der Bremseinheit (6) ein Sensor (18) zum Messen einer Abstützkraft der Bremseinheit (6) an der Fahrzeugkarosserie (10) des Kraftfahrzeugs (2) zugeordnet ist,
- mit den Verfahrensschritten:
- Diagnose der Bremseinheit (6) durch Feststellen des Rads (8) mittels der Bremseinheit (6), Erzeugen eines Antriebsmoments mittels eines Antriebsstrangs (22, 24, 26) des Kraftfahrzeugs (2) und Messen der Abstützkraft der Bremseinheit (6) infolge des Antriebsmoments;
und/oder
- Kalibrierung der Bremseinheit (6) durch Feststellen des Rads (8) mittels der Bremseinheit (6), Erzeugen mindestens eines definierten Antriebsmoments mittels des Antriebsstrangs (22, 24, 26) des Kraftfahrzeugs (2) und Anpassen von einem oder mehreren Steuerungsparametern der Bremseinheit (6), wie ein Reibwert, ein Sensorprofil des Kraftsensors (18) oder dergleichen;
und/oder
- Kalibrierung des Kraftsensors (18) durch Bestimmen einer Nullpunktverschiebung des Kraftsensors (18) durch Erfassen eines Messsignals im lastfreien Zustand des Kraftsensors (18) während das zugeordnete Rad (8) im Fahrbetrieb des Kraftfahrzeugs (2) ohne einen Bremseingriff der Bremseinheit (6) frei dreht und Speichern der Nullpunktverschiebung des Kraftsensors (18).

2. Verfahren nach Anspruch 1,
**dadurch gekennzeichnet, dass**
der Aktuator (12) ein Elektromotor (12) ist.

3. Verfahren nach Anspruch 1 oder 2,
**dadurch gekennzeichnet, dass**
das Kalibrieren der Bremseinheit (6) folgenden Verfahrensschritt aufweist: Erzeugen von zwei oder mehr definierten Antriebsmomenten mittels des Antriebsstrangs (22, 24, 26) des Kraftfahrzeugs (2) und Anpassen eines gespeicherten Sensorprofils des Kraftsensors (18) anhand von aus den Antriebsmomenten resultierenden Messwerten des Kraftsensors (18).

4. Verfahren nach einem der Ansprüche 1 bis 3,
**dadurch gekennzeichnet, dass**
das Erzeugen des Antriebsmoments zur Diagnose der Bremseinheit (6) im Stillstand des Fahrzeugs (2) erfolgt und/oder das Erzeugen des definierten Antriebsmoments zur Kalibrierung der Bremseinheit (6) im Stillstand des Fahrzeugs (2) erfolgt.

5. Verfahren nach einem der Ansprüche 1 bis 4,
**dadurch gekennzeichnet, dass**
- die Diagnose der Bremseinheit (6) und/oder die Kalibrierung der Bremseinheit (6) nach einem Startvorgang des Kraftfahrzeugs (2) und vor einer Fahrt mit dem Kraftfahrzeug (2) automatisiert durchgeführt werden
und/oder
- die Kalibrierung des Kraftsensors (18) während der Fahrt des Kraftfahrzeugs (2) automatisiert durchgeführt wird.

6. Verfahren nach einem der Ansprüche 1 bis 5,
**dadurch gekennzeichnet, dass**
der Kraftsensor (18) einen Dehnmesstreifen oder einen magnetoelastischen oder magnetoresistiven Kraftaufnehmer aufweist.

7. Verfahren nach einem der Ansprüche 1 bis 6,
**dadurch gekennzeichnet, dass**
das Bremssystem (4) zwei oder mehr Bremseinheiten (6) aufweist, wobei insbesondere jedem Rad (8) des Fahrzeugs (2) eine Bremseinheit (6) zugordnet ist und wobei Diagnose und/oder Kalibrierung für jede Bremseinheit (6) des Kraftfahrzeugs (2) automatisiert durchgeführt wird
und/oder
die Bremseinheit (6) eine Scheibenbremse aufweist.

8. Steuereinheit für ein Kraftfahrzeug,
wobei die Steuerreinheit (20) zur Durchführung eines Verfahrens gemäß einem der voranstehenden Ansprüche eingerichtet ist.

9. Kraftfahrzeug,
mit einem Antriebsstrang (22, 24, 26), mit einem Bremssystem (4) und mit einer Steuereinheit gemäß Anspruch 8.

10. Kraftfahrzeug nach Anspruch 9,
**dadurch gekennzeichnet, dass**
der Antriebsstrang (22, 24, 26) mindestens eine elektrische Maschine (22) zum Antrieb des Kraftfahrzeugs (2) hat, wobei das Kraftfahrzeug (2) ein rein elektromotorisch angetriebenes Fahrzeug (2) oder ein Hybridfahrzeug ist.

## Claims

1. Method for diagnosing and/or calibrating a brake system (4) of a motor vehicle (2),
- wherein the brake system (4) has at least one brake unit (6) for braking and arresting a wheel (8) of the motor vehicle (2) assigned to the brake unit (6),
- wherein the brake unit (6) is fastened to a vehicle body (10) of the motor vehicle (2), wherein the brake unit (6) has an actuator (12) for applying a brake lining (14) to a brake element (16), such as a brake disc (16) or the like, which is coupled to the wheel (8), and
- wherein the brake unit (6) is assigned a sensor (18) for measuring a supporting force of the brake unit (6) on the vehicle body (10) of the motor vehicle (2),
- with the method steps:
- diagnosing the brake unit (6) by arresting the wheel (8) by means of the brake unit (6), generating a drive torque by means of a drivetrain (22, 24, 26) of the motor vehicle (2) and measuring the supporting force of the brake unit (6) as a result of the drive torque;
and/or
- calibrating the brake unit (6) by arresting the wheel (8) by means of the brake unit (6), generating at least one defined drive torque by means of the drivetrain (22, 24, 26) of the motor vehicle (2) and adapting one or more control parameters of the brake unit (6), such as a coefficient of friction, a sensor profile of the force sensor (18) or the like;
and/or
- calibrating the force sensor (18) by determining a zero-point displacement of the force sensor (18) by detecting a measurement signal in the load-free state of the force sensor (18) while the assigned wheel (8) rotates freely during driving operation of the motor vehicle (2) without a braking intervention of the brake unit (6) and storing the zero-point displacement of the force sensor (18).

2. Method according to Claim 1,
**characterized in that**
the actuator (12) is an electric motor (12).

3. Method according to Claim 1 or 2,
**characterized in that**
the calibration of the brake unit (6) has the following method step: generating two or more defined drive torques by means of the drivetrain (22, 24, 26) of the motor vehicle (2) and adapting a stored sensor profile of the force sensor (18) on the basis of measured values of the force sensor (18) resulting from the drive torques.

4. Method according to one of Claims 1 to 3,
**characterized in that**
the generation of the drive torque for diagnosing the brake unit (6) takes place when the vehicle (2) is at a standstill and/or the generation of the defined drive torque for calibrating the brake unit (6) takes place when the vehicle (2) is at a standstill.

5. Method according to one of Claims 1 to 4,
**characterized in that**
- the diagnosis of the brake unit (6) and/or the calibration of the brake unit (6) are carried out in an automated manner after a starting process of the motor vehicle (2) and before a journey with the motor vehicle (2)
and/or
- the calibration of the force sensor (18) is carried out in an automated manner while the motor vehicle (2) is travelling.

6. Method according to one of Claims 1 to 5,
**characterized in that**
the force sensor (18) has a strain gauge or a magnetoelastic or magnetoresistive force transducer.

7. Method according to one of Claims 1 to 6,
**characterized in that**
the brake system (4) has two or more brake units (6), wherein in particular each wheel (8) of the vehicle (2) is assigned a brake unit (6) and wherein diagnosis and/or calibration is carried out in an automated manner for each brake unit (6) of the motor vehicle (2)
and/or
the brake unit (6) has a disc brake.

8. Control unit for a motor vehicle,
wherein the control unit (20) is configured to carry out a method according to one of the preceding claims.

9. Motor vehicle,
having a drivetrain (22, 24, 26), having a brake system (4) and having a control unit according to Claim 8.

10. Motor vehicle according to Claim 9,
**characterized in that**
the drivetrain (22, 24, 26) has at least one electric machine (22) for driving the motor vehicle (2), wherein the motor vehicle (2) is a purely electrically powered vehicle (2) or a hybrid vehicle.

## Revendications

1. Procédé de diagnostic et/ou d'étalonnage d'un système (4) de freinage d'un véhicule automobile (2),
- dans lequel le système de freinage (4) comporte au moins une unité de freinage (6) pour freiner et immobiliser une roue (8) du véhicule automobile (2) associée à l'unité de freinage (6),
- dans lequel l'unité de freinage (6) est fixée à une carrosserie de véhicule (10) du véhicule automobile (2), l'unité de freinage (6) comportant un actionneur (12) pour appliquer une plaquette de frein (14) sur un élément de frein (16) couplé à la roue (8), tel qu'un disque de frein (16) ou analogue, et
- dans lequel un capteur (18) destiné à mesurer une force d'appui de l'unité de freinage (6) sur la carrosserie de véhicule (10) du véhicule automobile (2) est associé à l'unité de freinage (6),
- comprenant les étapes de procédé suivantes :
- diagnostic de l'unité de freinage (6) par immobilisation de la roue (8) au moyen de l'unité de freinage (6), génération d'un couple d'entraînement par l'intermédiaire d'un groupe motopropulseur (22, 24, 26) du véhicule automobile (2) et mesure de la force d'appui de l'unité de freinage (6) résultant du couple d'entraînement ;
et/ou
- étalonnage de l'unité de freinage (6) par immobilisation de la roue (8) au moyen de l'unité de freinage (6), génération d'au moins un couple d'entraînement défini par l'intermédiaire du groupe motopropulseur (22, 24, 26) du véhicule automobile (2) et ajustement d'un ou plusieurs paramètres de commande de l'unité de freinage (6), tels qu'un coefficient de frottement, un profil de capteur du capteur de force (18) ou analogue ;
et/ou
- étalonnage du capteur de force (18) par détermination d'un décalage du zéro du capteur de force (18) par détection d'un signal de mesure à l'état hors charge du capteur de force (18) pendant que la roue (8) associée tourne librement lors du fonctionnement du véhicule automobile (2) sans intervention de freinage de l'unité de freinage (6), et mémorisation du décalage du zéro du capteur de force (18).

2. Procédé selon la revendication 1,
**caractérisé en ce que**
l'actionneur (12) est un moteur électrique (12).

3. Procédé selon la revendication 1 ou 2,
**caractérisé en ce que**
l'étalonnage de l'unité de freinage (6) comporte l'étape de procédé suivante : génération de deux couples d'entraînement définis ou plus au moyen du groupe motopropulseur (22, 24, 26) du véhicule automobile (2) et ajustement d'un profil de capteur mémorisé du capteur de force (18) sur la base des valeurs de mesure du capteur de force (18) résultant des couples d'entraînement.

4. Procédé selon l'une quelconque des revendications 1 à 3,
**caractérisé en ce que**
la génération du couple d'entraînement pour le diagnostic de l'unité de freinage (6) s'effectue à l'arrêt du véhicule (2) et/ou la génération du couple d'entraînement défini pour l'étalonnage de l'unité de freinage (6) s'effectue à l'arrêt du véhicule (2).

5. Procédé selon l'une quelconque des revendications 1 à 4,
**caractérisé en ce que**
- le diagnostic de l'unité de freinage (6) et/ou l'étalonnage de l'unité de freinage (6) sont réalisés de manière automatisée après une opération de démarrage du véhicule automobile (2) et avant un déplacement avec le véhicule automobile (2)
et/ou
- l'étalonnage du capteur de force (18) est effectué de manière automatisée pendant le déplacement du véhicule automobile (2).

6. Procédé selon l'une quelconque des revendications 1 à 5,
**caractérisé en ce que**
le capteur de force (18) comporte une jauge de contrainte ou un capteur de force magnétoélastique ou magnétorésistif.

7. Procédé selon l'une quelconque des revendications 1 à 6,
**caractérisé en ce que**
le système de freinage (4) comporte deux unités de freinage (6) ou plus, une unité de freinage (6) étant associée en particulier à chaque roue (8) du véhicule (2) et le diagnostic et/ou l'étalonnage de chaque unité de freinage (6) du véhicule automobile (2) étant réalisés de manière automatisée
et/ou
l'unité de freinage (6) comporte un frein à disque.

8. Unité de commande pour un véhicule automobile, l'unité de commande (20) étant conçue pour mettre en œuvre un procédé selon l'une quelconque des revendications précédentes.

9. Véhicule automobile,
comprenant un groupe motopropulseur (22, 24, 26), un système de freinage (4) et une unité de commande selon la revendication 8.

10. Véhicule automobile selon la revendication 9, **caractérisé en ce que**
le groupe motopropulseur (22, 24, 26) comporte au moins une machine électrique (22) pour l'entraînement du véhicule automobile (2), le véhicule automobile (2) étant un véhicule entraîné par moteur électrique (2) ou un véhicule hybride.
